# FASCICULE DE BREVET EUROPEEN

(11) **EP 1 127 033 B1**
(45) Date de publication et mention de la délivrance du brevet: **15.12.2004**
(21) Numéro de dépôt: 00958684.3
(22) Date de dépôt: 11.08.2000
(51) Int. Cl.: C04B 16/06, E04C 5/07

(54) **FIL DE RENFORCEMENT POUR BETONS ET MORTIERS DE CIMENT**
VERSTÄRKUNGSFADEN FÜR BETON UND ZEMENTMÖRTEL
REINFORCING YARN FOR CONCRETE MIXTURES AND CEMENT MORTARS

(30) Priorité: 25.08.1999 FR 9910886
(43) Date de publication de la demande: 29.08.2001
(73) Titulaire: SA Schappe, 88520 Ban de Laveline (FR)
(72) Inventeur: GUEVEL, Jean, F-01480 Jassans Riottier (FR); BONTEMPS, Guy, F-01970 Tenay (FR)
(74) Mandataire: Maureau, Philippe
(86) Numéro de dépôt international: PCT/FR2000/002318
(87) Numéro de publication internationale: WO 2001/014275

(56) Documents cités:
- EP-A- 0 155 520
- GB-A- 2 175 892
- US-A- 4 474 907
- US-A- 5 814 146
- PATENT ABSTRACTS OF JAPAN vol. 015, no. 182 (M-1111), 10 mai 1991 (1991-05-10) & JP 03 043551 A (KURARAY CO LTD;OTHERS: 01), 25 février 1991 (1991-02-25)
- PATENT ABSTRACTS OF JAPAN vol. 1999, no. 11, 30 septembre 1999 (1999-09-30) & JP 11 157894 A (KURARAY CO LTD), 15 juin 1999 (1999-06-15)

## Description

La présente invention concerne des fils de renforcement pour bétons et mortiers de ciment. De tels fils sont notamment utilisés pour le renforcement de plaques, ondulées ou non, utilisées pour la couverture de constructions destinées à l'agriculture, à l'industrie et aussi aux habitations domestiques.

Il est connu depuis de très longues années d'utiliser comme renforcement dans les ciments de mortier et de béton des fibres d'amiante et plus particulièrement la Chrysotile, encore appelée amiante blanche. Ce silicate de magnésium hydraté possède de très bonnes propriétés mécaniques, alliées à une bonne compatibilité chimique dans les milieux alcalins que sont les composés à base de ciment.

La quantité pondérale de fibres incorporée pendant le malaxage est importante et peut atteindre, dans le produit fini, plus de 30% du poids total. La masse volumique des fibres d'amiante est importante (supérieure à 2,5 kg/dm³) et permet de facilement mélanger ces fibres avec les matrices cimenteuses. La masse volumique de ces dernières est d'ailleurs du même ordre de grandeur que celle des fibres d'amiante. L'amiante présente en outre l'avantage d'être d'un prix faible grâce à son abondance naturelle.

Les plaques constituées d'un mélange de mortier de ciment ou de béton et de fibres d'amiante présentent une bonne rigidité ainsi qu'une bonne résistance aux chocs.

Toutefois, il est connu maintenant que l'utilisation de fibres d'amiante peut induire différentes maladies professionnelles aux opérateurs qui sont amenés à la manipuler sous différentes formes. De ce fait, les administrations sanitaires de nombreux pays ont décidé d'interdire son utilisation dans les différents secteurs où elle était utilisée. Il s'est alors posé le problème de son remplacement dans le domaine du renforcement des mortiers de ciment et des bétons.

Des essais ont été réalisés pour remplacer les fibres naturelles d'amiante par des fibres chimiques. Plusieurs types de fibres, coupées entre 10 et 50 mm pour contretyper ce qui était fait avec l'amiante, ont été utilisés. On peut notamment citer les fibres d'acrylique homopolymère, les fibres d'alcool polyvinylique et les fibres de polypropylène. Les deux familles de fibres réellement adaptées aux renforcements aléatoires sous forme coupée sont les fibres d'alcool polyvinylique (PVA) et la fibre d'acrylique qui réunissent à la fois une bonne tenue en milieu alcalin et un bon module.

Toutefois, un problème de mise en oeuvre subsiste lors de l'incorporation des fibres coupées dans les matrices à base de ciment. Les masses volumiques des fibres acryliques et PVA sont respectivement de 1,18 kg/dm³ et 1,30 kg/dm³. L'incorporation de fort taux de fibres avec des masses volumiques environ égales à la moitié de celles de la fibre d'amiante pose de gros problèmes de mise en oeuvre. Pour résoudre les difficultés rencontrées, les taux de fibres ont été réduits de manière importante, entraînant de ce fait une baisse des caractéristiques des produits obtenus, en particulier les plaques ondulées destinées à la couverture de bâtiments.

Des solutions ont été mises en oeuvre pour palier à ces difficultés. Il est ainsi connu de renforcer les plaques obtenues avec un mélange de fibres synthétiques et de mortier de ciment ou de béton. Ces renforts sont par exemple des rubans extrudés en polypropylène, des filés de fibres issus du règne végétal (sisal, ramie, lin, etc.) ou bien encore des fibres synthétiques pures ou mélangées. Ces fils sont insérés pendant la fabrication des plaques, la matrice étant encore pâteuse.

Ce mode de renforcement n'atteint toutefois pas les obligations imposées par la normalisation en matière de sécurité. En effet, les règles en vigueur dans les différents pays imposent un minimum de résistance aux chocs pour les plaques, lesquelles sont en fonction du type de couverture d'immeuble. Trois niveaux de résistance aux chocs sont actuellement utilisés : 600 Joule, 900 Joule et 1200 Joule. Les commissions de normalisation retiennent de plus en plus souvent les valeurs de 900 ou 1200 Joule.

Le document GB A 2 175 892 concerne une composition à base de ciment contenant notamment des fibres coupées d'alcool polyvinylique et de polyéthylène.

Le document US A 5 814 146 concerne un ciment dont la résistance est améliorée par incorporation de fibres résistantes aux agents basiques.

Certains produits à base de rubans extrudés à base de polypropylène arrivent à atteindre 900 voire 1200 Joule. Une difficulté apparaît cependant avec ces rubans car des initiations de délaminage se forment aux angles du ruban et sous l'effet des écarts climatiques (chaleur, froid, humidité, surcharge due à la neige, gel, etc.) vont progressivement faire perdre l'intégrité des caractéristiques du matériau.

La présente invention a alors pour but de fournir un renfort utilisable dans un béton ou un mortier de ciment et permettant d'améliorer sensiblement la résistance aux chocs d'une plaque réalisée à partir d'une matrice cimenteuse.

L'invention propose un fil de renforcement, notamment pour mortiers de ciment ou bétons, renforcés ou non de fibres, caractérisé en ce qu'il est constitué par un filé de fibres polyéthylène à haut poids moléculaire et de fibres d'alcool polyvinylique haute ténacitéun À cet effet, elle propose un fil de renforcement, notamment pour mortiers de ciment ou bétons, renforcés ou non de fibres, caractérisé en ce qu'il est réalisé à partir de fibres polyéthylène à haut poids moléculaire et de fibres d'alcool polyvinylique haute ténacité.

Le fil de renforcement est un filé de fibres, c'est à dire un fil composé de fibres discontinues maintenues ensemble, généralement par torsion, éventuellement par d'autres procédés tels que collage, guipage de fil continu, etc.

La combinaison de ces deux fibres permet d'obtenir des fils de renforcement qui procurent à la structure qu'ils renforcent une bonne résistance aux chocs. Ces fils combinent les caractéristiques de bonne adhérence à la matrice cimenteuse donnée par les fibres en alcool polyvinylique à la bonne résistance mécanique des fibres de polyéthylène.

Lorsque de tels fils sont insérés dans une structure en béton ou en mortier de ciment, on n'a pas les phénomènes de délaminage que l'on peut observer avec un ruban en polypropylène.

Le polyéthylène utilisé est par exemple un polyéthylène à haut poids moléculaire, compris entre 500 000 g/mole et 700 000 g/mole, tandis que les fibres d'alcool polyvinylique sont par exemple des fibres fortement réticulées.

Pour permettre un meilleur renforcement, les fibres de polyéthylène et les fibres d'alcool polyvinylique sont obtenues par craquage lent et progressif de multifilaments.

Pour obtenir une bonne résistance au choc, la proportion de fibres polyéthylène est comprise entre 30 et 65% en valeur pondérale, le complément étant amené par la fibre d'alcool polyvinylique.

Pour permettre une meilleure insertion d'un fil de renforcement selon l'invention dans une matrice cimenteuse, ce fil comporte avantageusement 0,5 à 7% d'un ensimage à base de polyéthylène oxydé.

Un fil de renforcement selon l'invention dont le titre se situe entre 0,8/2 Nm et 2,4/2 Nm permet de bonnes performances en matière de résistance au choc.

Pour pouvoir détecter par voie électromagnétique un fil de renforcement tel que décrit ci-dessus, ce fil comporte par exemple également un monofilament d'acier allié ou non.

L'invention concerne également une plaque en béton ou mortier de ciment, caractérisée en ce qu'elle est renforcée par au moins un fil de renforcement tel que décrit ci-dessus.

De toute façon, l'invention sera bien comprise à l'aide de la description qui suit, en référence au dessin schématique annexé, représentant à titre d'exemple non limitatif une plaque renforcée de fils selon l'invention et une courbe illustrant les performances obtenues avec des fils selon l'invention.

Figure 1 est une vue en perspective d'une plaque ondulée utilisant des fils de renforcement selon l'invention, et

Figure 2 est un diagramme illustrant la résistance aux chocs de la plaque représentée sur la figure 1 en fonction de la composition des fils de renforcement utilisés.

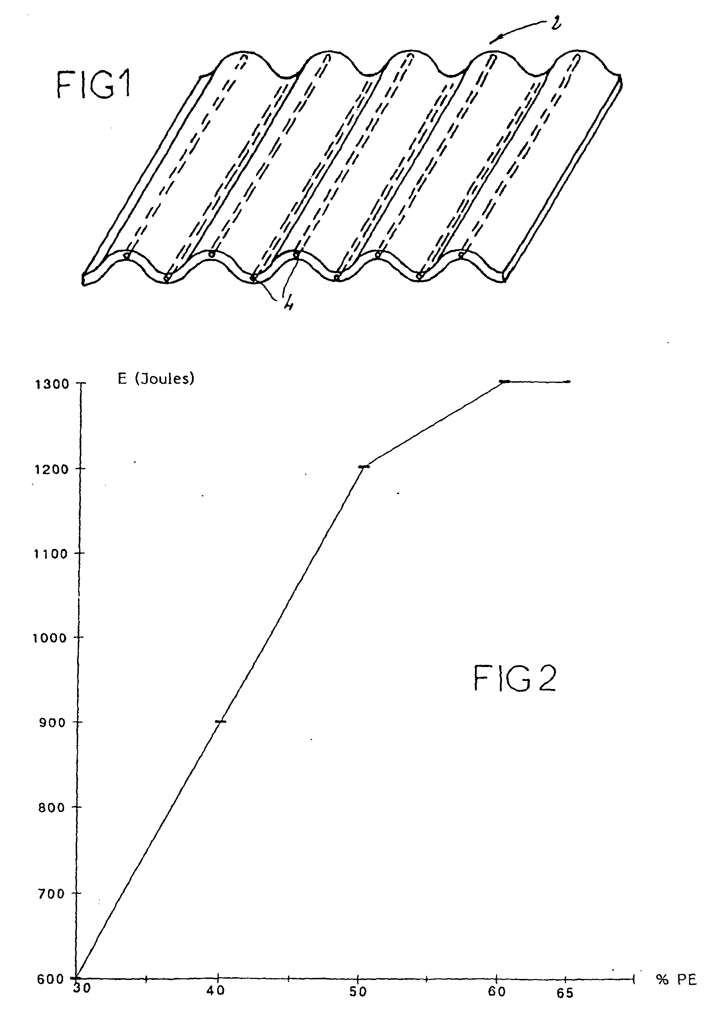

La figure 1 représente une plaque ondulée 2 réalisée à base de béton renforcé par des fibres, par exemple des fibres acryliques. Cette plaque 2 présente des creux et des vagues qui s'étendent longitudinalement. Au fond de chaque creux et au sommet de chaque vague, s'étend longitudinalement un fil 4 de renfort qui est logé au coeur de la plaque 2.

La plaque 2 est par exemple fabriquée par extrusion. Une première couche de béton renforcé de fibres est tout d'abord extrudée, puis posée sur un support ondulé, puis les fils de renfort 4 sont disposés sur la couche de béton extrudé non encore séchée avant d'être pris en sandwich par une seconde couche de béton extrudé posée sur la première. L'ensemble passe alors dans une étuve pour sécher le béton et obtenir le produit final.

L'invention réside dans les fils de renfort utilisés. Ceux-ci sont réalisés à base de fibres de polyéthylène à haut poids moléculaire et de fibres d'alcool polyvinylique haute ténacité. Un troisième type de fibres pourrait être utilisé, comme par exemple des fibres acryliques, mais les exemples ci-après ne concernent que des fils bi-composants.

Le polyéthylène utilisé présente par exemple un poids moléculaire de 600 000 g/mole. Il présente une très haute ténacité de 370 cN/tex, soit 3500MPa. Son module est d'environ 70 GPa et son allongement est inférieur à 5%. Ce matériau ne présente pas d'adhérence vis à vis des matrices ciments et est chimiquement parfaitement inerte, quel que soit le milieu, et en particulier dans un milieu basique, comme c'est le cas dans les mortiers de ciment et les bétons.

L'alcool polyvinylique utilisé est un alcool très réticulé et à haute ténacité. Il présente un très haute adhérence vis à vis des matrices ciments et, comme le polyéthylène décrit ci-dessus, il est chimiquement parfaitement inerte dans tous les milieux et en particulier dans les milieux basiques. Sa ténacité est de 80 cN/tex, ce qui correspond à 1100 MPa, son module est de 16 GPa et son allongement reste inférieur à 7%.

Un filé est réalisé à partir de fibres réalisées dans ces deux matériaux. Les proportions entre ces deux types de fibres peuvent varier. Les fibres utilisées pour réaliser ce filé sont par exemple obtenues par un craquage lent et progressif de multifilaments. Un filé est un fil composé de fibres discontinues maintenues ensemble, généralement par torsion, mais éventuellement aussi par d'autres procédés tels que collage, guipage de fil continu, etc.

### 1^{er} exemple de réalisation

Le filé réalisé est composé de 30% en poids de fibres de polyéthylène à haute ténacité (PE HT) et de 70% en poids de fibres d'alcool polyvinylique à haute ténacité (PVA HT).

Le filé obtenu en utilisant ces proportions présente les performances suivantes :
titre : Nm 1,5/2 (666 tex x 2)
résistance à la rupture : 100 daN
allongement à la rupture : 7%
Nm est l'abréviation utilisée pour "Numéro métrique".

De tels fils, disposés comme indiqué en référence à la figure 1, permettent à une plaque ondulée de résister à un choc mettant en jeu une énergie de 600 Joule. Cette valeur a été portée sur le diagramme de la figure 2. Sur ce diagramme, la proportion en fibre de polyéthylène a été portée sur l'axe des abscisses, sachant que le complément à 100% est apporté par des fibres en alcool polyvinylique, et l'énergie d'un choc absorbable par une plaque renforcée par des fils selon l'invention a été portée en ordonnée.

### 2^{ème} exemple de réalisation

Le filé réalisé est composé de 40% en poids de fibres de polyéthylène à haute ténacité (PE HT) et de 60% en poids de fibres d'alcool polyvinylique à haute ténacité (PVA HT).

Le filé obtenu en utilisant ces proportions présente les performances suivantes :
titre : Nm 1,5/2 (666 tex x 2)
résistance à la rupture : 120 daN
allongement à la rupture : 7%

De tels fils, disposés comme indiqué en référence à la figure 1, permettent à une plaque ondulée de résister à un choc mettant en jeu une énergie de 900 Joule. Cette valeur a été portée sur le diagramme de la figure 2.

### 3^{ème} exemple de réalisation

Le filé réalisé est composé de 50% en poids de fibres de polyéthylène à haute ténacité (PE HT) et de 50% en poids de fibres d'alcool polyvinylique à haute ténacité (PVA HT).

Le filé obtenu en utilisant ces proportions présente les performances suivantes :
titre : Nm 1,5/2 (666 tex x 2)
résistance à la rupture : 140 daN
allongement à la rupture : 7%

De tels fils, disposés comme indiqué en référence à la figure 1, permettent à une plaque ondulée de résister à un choc mettant en jeu une énergie de 1200 Joule. Cette valeur a été portée sur le diagramme de la figure 2.

### 4^{ème} exemple de réalisation

Le filé réalisé est composé de 60% en poids de fibres de polyéthylène à haute ténacité (PE HT) et de 40% en poids de fibres d'alcool polyvinylique à haute ténacité (PVA HT).

Le filé obtenu en utilisant ces proportions présente les performances suivantes :
titre : Nm 1,5/2 (666 tex x 2)
résistance à la rupture : 160 daN
allongement à la rupture : 7%

De tels fils, disposés comme indiqué en référence à la figure 1, permettent à une plaque ondulée de résister à un choc mettant en jeu une énergie de 1300 Joule. Cette valeur a été portée sur le diagramme de la figure 2.

### 5^{ème} exemple de réalisation

Le filé réalisé est composé de 65% en poids de fibres de polyéthylène à haute ténacité (PE HT) et de 35% en poids de fibres d'alcool polyvinylique à haute ténacité (PVA HT).

Le filé obtenu en utilisant ces proportions présente les performances suivantes :
titre : Nm 1,5/2 (666 tex x 2)
résistance à la rupture : 165 daN
allongement à la rupture : 7%

De tels fils, disposés comme indiqué en référence à la figure 1, permettent à une plaque ondulée de résister à un choc mettant en jeu une énergie de 1300 Joule. Cette valeur a été portée sur le diagramme de la figure 2.

On constate ici qu'en augmentant la proportion de fibres de polyéthylène la résistance au choc de la plaque ne varie plus guère. En effet, si le filé était réalisé à 100% avec des fibres polyéthylène qui n'ont aucune adhérence dans les matrices cimenteuses, au moment du choc, les filés se délamineraient très facilement et n'absorberaient que très peu d'énergie. Le mécanisme mis en jeu lors d'un choc provoque le déchaussement des fils dans la matrice cimenteuse. L'absorption d'énergie résulte de l'adhérence partielle donnée par les fibres en alcool polyvinylique mais qui permet aux fils de glisser dans la matrice cimenteuse en absorbant de l'énergie. Ceci est connu de l'homme du métier sous le nom de phénomène de pull out.

En variante de réalisation, on peut imaginer de venir associer au fil de renfort 4 un monofilament d'acier, allié ou non. Ce filament d'acier permet de contrôler par voie électromagnétique la présence du fil de renfort. Ce contrôle assure la présence des fils de renfort et garantit ainsi une résistance à la plaque réalisée.

Pour améliorer le processus d'insertion des fils de renfort 4 dans une matrice de mortier de ciment ou de béton, il est possible d'ajouter un ensimage à base de polyéthylène oxydé lors de la réalisation du filé. Une proportion d'environ 0,5% à 7% est envisageable.

Bien entendu, l'invention ne se limite pas aux exemples de réalisation décrits ci-dessus à titre d'exemples non limitatifs ; elle en embrasse au contraire toutes les variantes dans le cadre des revendications ci-après.

Ainsi toutes les valeurs numériques sont données pour illustrer l'invention et sont pour certaines d'entre elles le résultat d'essais qui ont été réalisés en laboratoire.

Les fibres décrites sont des fibres qui permettent d'obtenir de bons résultats et correspondent au mode de réalisation préféré au moment du dépôt de cette demande de brevet. D'autres fibres de polyéthylène haute densité et d'alcool polyvinylique haute ténacité peuvent bien entendu également convenir.

Les fils de renforcements selon l'invention peuvent être utilisés pour renforcer des plaques ondulées ou non en béton et mortier de ciment chargé ou non de fibres. Ils peuvent également être utilisés pour toute autre application de renforcement d'une structure. Leur disposition dans cette structure n'est pas forcément une disposition où les fils sont parallèles les uns aux autres. Les fils peuvent être disposés en plusieurs couches, tissés ou non, etc.

## Revendications

1. Fil de renforcement, notamment pour mortiers de ciment ou bétons, renforcés ou non de fibres, **caractérisé en ce qu'**il est constitué par un filé de fibres polyéthylène à haut poids moléculaire et de fibres d'alcool polyvinylique haute ténacité.

2. Fil de renforcement selon la revendication 1, **caractérisé en ce que** le polyéthylène utilisé est un polyéthylène à haut poids moléculaire, compris entre 500 000 g/mole et 700 000 g/mole.

3. Fil de renforcement selon l'une des revendications 1 et 2, **caractérisé en ce que** les fibres d'alcool polyvinylique sont des fibres fortement réticulées.

4. Fil de renforcement selon l'une des revendications 1 à 3, **caractérisé en ce que** les fibres de polyéthylène et les fibres d'alcool polyvinylique sont obtenues par craquage lent et progressif de multifilaments.

5. Fil de renforcement selon l'une des revendications 1 à 4, **caractérisé en ce que** la proportion de fibres polyéthylène est comprise entre 30 et 65% en valeur pondérale, le complément étant amené par la fibre d'alcool polyvinylique.

6. Fil de renforcement selon l'une des revendications 1 à 5, **caractérisé en ce qu'**il comporte 0,5 à 7% d'un ensimage à base de polyéthylène oxydé.

7. Fil de renforcement selon l'une des revendications 1 à 6, **caractérisé en ce que** le titre du fil se situe entre 0,8/2 Nm et 2,4/2 Nm.

8. Fil de renforcement selon l'une des revendications 1 à 7, **caractérisé en ce qu'**il comporte également un monofilament d'acier allié ou non.

9. Plaque en béton ou mortier de ciment, **caractérisée en ce qu'**elle est renforcée par au moins un fil de renforcement selon l'une des revendications 1 à 8.

## Patentansprüche

1. Verstärkungsfaden, insbesondere für Zementmörtel oder Betone, welche faserverstärkt sind oder nicht, **dadurch gekennzeichnet, dass** er aus einem Garn von Polyethylenfasern mit hohem Molekulargewicht und Polyvinylalkoholfasern mit hoher Festigkeit gebildet ist.

2. Verstärkungsfaden nach Anspruch 1, **dadurch gekennzeichnet, dass** das verwendete Polyethylen ein Polyethylen mit hohem Molekulargewicht, zwischen 500.000 g/Mol und 700.000 g/Mol, ist.

3. Verstärkungsfaden nach einem der Ansprüche 1 und 2, **dadurch gekennzeichnet, dass** die Polyvinylalkoholfasern stark vernetzte Fasern sind.

4. Verstärkungsfaden nach einem der Ansprüche 1 bis 3, **dadurch gekennzeichnet, dass** die Polyethylenfasern und die Polyvinylalkoholfasern durch langsames und progressives Kracken von Multifilamenten erhalten werden.

5. Verstärkungsfaden nach einem der Ansprüche 1 bis 4, **dadurch gekennzeichnet, dass** der Anteil der Polyethylenfasern zwischen 30 und 65%, bezogen auf Gewicht liegt, wobei die Polyvinylalkaholfaser den Rest ausmacht.

6. Verstärkungsfaden nach einem der Ansprüche 1 bis 5, **dadurch gekennzeichnet, dass** er 0,5 bis 7% einer Schlichte auf Basis von Polyethylenoxid umfasst.

7. Verstärkungsfaden nach einem der Ansprüche 1 bis 6, **dadurch gekennzeichnet, dass** der Titer des Fadens zwischen 0,8/2 und 2,4/2 Nm (numéro métrique) liegt.

8. Verstärkungsfaden nach einem der Ansprüche 1 bis 7, **dadurch gekennzeichnet, dass** er auch ein Monofilament aus legiertem oder nicht legiertem Stahl umfasst.

9. Platte aus Beton oder Zementmörtel, **dadurch gekennzeichnet, dass** sie durch mindestens einen Verstärkungsfaden nach einem der Ansprüche 1 bis 8 verstärkt ist.

## Claims

1. A reinforcing filament, particularly for fibre-reinforced or non-fibre-reinforced cement mortars or concrete, **characterised in that** it is formed by a thread comprising high molecular weight polyethylene fibres and high-tenacity polyvinyl alcohol fibres.

2. A reinforcing filament according to claim 1, **characterised in that** the polyethylene used is a polyethylene with a high molecular weight between 500,000 g/mol and 700,000 g/mol.

3. A reinforcing filament according to either one of claims 1 or 2, **characterised in that** the polyvinyl alcohol fibres are strongly cross-linked fibres.

4. A reinforcing filament according to any one of claims 1 to 3, **characterised in that** the polythene fibres and the polyvinyl alcohol fibres are obtained by the slow, progressive cracking of multifilaments.

5. A reinforcing filament according to any one of claims 1 to 4, **characterised in that** the proportion of polyethylene fibres ranges between 30 and 65 % by weight, the balance being polyvinyl alcohol fibres.

6. A reinforcing filament according to any one of claims 1 to 5, **characterised in that** it comprises 0.5 to 7 % of a size based on polyethylene oxide.

7. A reinforcing filament according to any one of claims 1 to 6, **characterised in that** the titre of the filament ranges between 0.8/2 Nm and 2.4/2 Nm.

8. A reinforcing filament according to any one of claims 1 to 7, **characterised in that** it also comprises a monofilament made of alloyed or non-alloyed steel.

9. A sheet made of concrete or cement mortar, **characterised in that** it is reinforced by at least one reinforcing filament according to any one of claims 1 to 8.
